(19) Europäisches Patentamt
European Patent Office
Office européen des brevets

(11) **EP 1 351 485 B1**

(12) **EUROPEAN PATENT SPECIFICATION**

(45) Date of publication and mention
of the grant of the patent:
**31.12.2008 Bulletin 2009/01**

(51) Int Cl.:
***H04N 1/21*** *(2006.01)*

(21) Application number: **03006207.9**

(22) Date of filing: **19.03.2003**

(54) **Dating system and date position judging system for photographs**

Datumsystem und System zum Feststellen der Datumsposition für Fotographien

Système de datation et système d'estimation de la position d'une date pour photographies

(84) Designated Contracting States:
**DE FR GB**

(30) Priority: **20.03.2002 JP 2002079276**
**20.03.2002 JP 2002079255**

(43) Date of publication of application:
**08.10.2003 Bulletin 2003/41**

(73) Proprietor: **FUJIFILM Corporation**
**Minato-ku**
**Tokyo (JP)**

(72) Inventors:
• **Mochizuki, Naoki,**
**Fuji Photo Film Co., Ltd.**
**Ashigarakami-gun,**
**Kanagawa-ken (JP)**
• **Tsue, Takashi,**
**Fuji Photo Film Co., Ltd.**
**Ashigarakami-gun,**
**Kanagawa-ken (JP)**

(74) Representative: **Klunker . Schmitt-Nilson . Hirsch**
**Winzererstrasse 106**
**80797 München (DE)**

(56) References cited:
**EP-A- 0 751 673**          **US-A- 5 010 580**
**US-A- 5 576 759**          **US-A- 6 092 023**
**US-A1- 2001 055 126**

• **PATENT ABSTRACTS OF JAPAN vol. 2000, no. 19, 5 June 2001 (2001-06-05) -& JP 2001 043360 A (KONICA CORP), 16 February 2001 (2001-02-16)**
• **PATENT ABSTRACTS OF JAPAN vol. 2000, no. 09, 13 October 2000 (2000-10-13) & JP 2000 184168 A (OLYMPUS OPTICAL CO LTD), 30 June 2000 (2000-06-30)**
• **PATENT ABSTRACTS OF JAPAN vol. 018, no. 649 (P-1840), 9 December 1994 (1994-12-09) & JP 06 251083 A (HITACHI LTD), 9 September 1994 (1994-09-09)**
• **PATENT ABSTRACTS OF JAPAN vol. 1999, no. 13, 30 November 1999 (1999-11-30) & JP 11 212992 A (SHARP CORP), 6 August 1999 (1999-08-06)**

**Description**

BACKGROUND OF THE INVENTION

Field of the Invention

This invention relates to a dating system according to the preamble of claim 1. It also relates to a photography date obtaining apparatus and a computer program for causing a computer to date image data obtained from a photograph or a photographic film.

Description of the Related Art

As a large capacity recording medium becomes inexpensive, a large amount of data has come to be personally stored, and a system for storing and managing a large amount of image data like an electronic album has come to be personally possessed. Further, there has been offered a service of managing image data representing photographs of a user like an electronic album in place of the user. Such a managing system is required to digitize existing photographs such as silver halide photographs and manage them as well as to manage digital photographs taken by a digital camera. When digitized, managing of the photographs is facilitated and aging of the photographs can be avoided.

In order to manage a large number of pieces of image data, it is necessary to classify the pieces of image data so that subsequent retrieval and viewing are facilitated and the way of classification can be intuitively understood. As the way of classification, a way using the dates of taking the photographs is most practical. As disclosed, for instance, in Japanese Unexamined Patent Publication No. 6(1994)-251083, there has been proposed a technology of electronic album in which pieces of image data are recorded in the order of date. However, this technology is disadvantageous in that it requires manual input of the dates, which results in load on the user, and is practically inconvenient.

As a way of automatically classifying pieces of image data by dates without loading the user, there has been proposed a way in which the dates recorded on photographs (recently the dates of taking the photograph are often recorded on photographs partly overlapping the object in the case of silver halide photographs) are automatically recognized when photographic prints or films are converted to pieces of image data by an image scanner and attached to the pieces of image data. However, this approach gives rise to a problem that automatic recognition of the dates is impossible when the dates are in a color similar to that of the background. Further, depending on setting of the photographic camera, no date is recorded on photographs.

In order to overcome this problem, there have been proposed image processing systems which provides date information to image data representing photographs whose date cannot be automatically recognized as disclosed, for instance, in Japanese Unexamined Patent Publication Nos. 11(1999)-212992 and 2000-184168. In the system disclosed in the former publication, when a plurality of photographs on one roll of film are converted to pieces of image data, a piece of image data representing a photograph whose date can be recognized is given the recognized date and a piece of image data representing a photograph whose date cannot be recognized is given the same date as the image data representing a preceding photograph whose date can be recognized. In the system disclosed in the latter publication, a piece of image data representing a photograph whose date cannot be recognized is given a date estimated on the basis of dates of the photographs before and after the photograph.

However, the systems disclosed in the patent publications are both disadvantageous in that since they are based on the assumption that dates for all the photographs on one roll of film are to be recognized, recognition of dates requires a long time and makes the process complicated and slow.

Further, the system disclosed in the former patent publication is disadvantageous in that since a piece of image data representing a photograph whose date cannot be recognized is given the same date as the image data representing a preceding photograph whose date can be recognized, the estimated and provided date is not accurate.

Further, in order to realize automatic recognition of the date of taking the photograph, the position of the date recorded on each photograph must be first determined. As a method of realizing this, there has been disclosed, for instance, in Japanese Unexamined Patent Publication No. 2000-184168, a method in which assuming that the date is generally recorded at one of the four corners, a predetermined area of interest is set in each of the four corners and the position of date is determined by scanning the predetermined areas of interest in sequence.

However this method of automatically determining the position of the date is disadvantageous in that it takes a long time to determine the position of the date since the four corners must be all scanned.

Further, since depending on the kind of the camera, the date is not always recorded at a corner of the photograph and the date is not always in the predetermined area of interest, the position of date cannot be detected unless the size of the area of interest is adjusted.

In accordance with the preamble of claim 1, US-A1-2001/055126 discloses a dating system in which date information is extracted from a recognized date position. When no date information can be detected or when date information can hardly be recognized, the photographing date is estimated on the basis of statistics of a change of tone characteristics of the image on a silver halide film, since the change of tone characteristic corresponds to the time ellapsed. This is based on the findings that the extent of color fading of a silver halide photograph depends on the period during which the photograph has been preserved.

SUMMARY OF THE INVENTION

In view of the foregoing observations and description, the primary object of the present invention is to provide a dating system which can rapidly and accurately dates a piece of image data representing a photograph and a program for the dating system.

In accordance with a first aspect of the present invention, there is provided a dating system comprising the features of claim 1.

The expression "a plurality of photographs taken in a time series" as used here means a plurality of photographs which are provided in the order of the time of taking the photographs and means, for instance, photographs taken on a photographic film roll.

The "photograph" may be either a photograph on a photographic film or a print.

The probability judging means is for judging a probability that date information can be extracted from each of the pieces of image data, and may comprise, for instance, a date position detecting means which detects the position of the date on the photograph represented by the piece of image data, and an estimating means which estimates that the probability is higher as the flatness and/or the blackness of the background of the date position is higher.

The "blackness" as used here should be broadly interpreted to include the degree of density as well as blackness in the usual sense.

The "flatness" as used here means the converse of the irregularity or the complicatedness of the background and as the irregularity or the complicatedness of the background is lower, the flatness of the background is higher.

As the conversion means of the dating system, for instance, a film scanner which reads an image recorded on a photographic film and converts it into a piece of image data can be employed.

In accordance with a second aspect of the present invention, there is provided a computer program having the features of claim 4.

The computer program for causing a computer to perform the program of the second aspect of the present invention may be recorded in a computer readable medium so that the computer can perform the program when loaded with the recording medium. A skilled artisan would know that the computer readable medium is not limited to any specific type of storage devices and includes any kind of device, including but not limited to CDs, floppy disks, RAMs, ROMs, hard disks, magnetic tapes and internet downloads, in which computer instructions can be stored and/or transmitted. Transmission of the computer code through a network or through wireless transmission means is also within the scope of this invention. Additionally, computer code/instructions include, but are not limited to, source, object and executable code and can be in any language including higher level languages, assembly language and machine language.

In accordance with the dating system of the present invention, since recognition of dates for all the photographs is not necessary, processing can be executed rapidly.

Further, since a plurality of photographs taken, for instance, by a photographic camera are necessarily arranged in the order of dates of taking the photographs, a photograph taken between a pair of photographs taken under the same date is necessarily taken on the same day. Accordingly, in accordance with the present invention, the photographs can be accurately dated.

In accordance with a further aspect of the present invention, there is provided a photography date obtaining apparatus having the features of claim 6.

The "photograph" may be either a photograph on a photographic film or a print.

The "addition image data" is an image data obtained by adding up the signal values for the same pixels of the plurality of pieces of image data, wherein the "signal values" are values of, for instance, a red signal, a green signal, and a blue signal.

Further, the "addition processing" may be either a simple addition or processing in which the signal values are once simply added up and then the sum is averaged.

The pieces of image data to be added either may be pieces of image data representing all the photographs photographed on one roll of photographic film or pieces of image data representing only some of them. In the latter case, it is preferred that the pieces of image data to be employed represents photographs where, it is, for instance, visually confirmed that a date is clearly recorded.

Though various in objects, the photographs photographed on one roll of photographic films are substantially the same in position, color and shape of date. The date position judging system in accordance with the third aspect of the present invention detects the position of date on the basis of these properties. For example, the operation means adds up the signal values of each color (R, G and B) for the same pixels of the plurality of pieces of image data and obtains addition signal components of the three colors of addition image data. Generally pixels not corresponding to a date exhibit a color close to gray but average color data for pixels corresponding to a date represents a color close to a color unique to the date (e.g., red or yellow). The date position judging system of the present invention detects pixels exhibiting a color close to the date color on the basis of color data for the respective pixels of the addition image data and determines the position of such pixels as the position of date.

Though it is possible to detect the position of date simply on the basis of the color of pixels, it is possible to further accurately detect the position of date by identifying the shape, size and the like of the date on the basis of the photographic camera used in the photographing and selecting pixels corresponding to the date as well as on the basis of the color of pixels.

As the conversion means of the date position judging means, for instance, a film scanner which reads an image recorded on a photographic film and converts it into a piece of image data can be employed.

In accordance with a further aspect of the present invention, there is provided a computer program having the features of claim 8.

The computer program for causing a computer to perform the program of the fourth aspect of the present invention may be recorded in a computer readable medium so that the computer can perform the program when loaded with the recording medium. A skilled artisan would know that the computer readable medium is not limited to any specific type of storage devices and includes any kind of device, including but not limited to CDs, floppy disks, RAMs, ROMs, hard disks, magnetic tapes and internet downloads, in which computer instructions can be stored and/or transmitted. Transmission of the computer code through a network or through wireless transmission means is also within the scope of this invention. Additionally, computer code/instructions include, but are not limited to, source, object and executable code and can be in any language including higher level languages, assembly language and machine language.

In accordance with the date position judging system of the present invention, it is not necessary to scan all the prospective positions of date, which makes it simple the processing.

Further since in accordance with the present invention, the pixels corresponding to the date are detected on the basis of the signal values for all the pixels of the addition image data, it is not necessary to set any prospective position of date and at the same time, the position of date can be accurately detected.

BRIEF DESCRIPTION OF THE DRAWINGS

Figure 1 is a block diagram showing an image storing system in accordance with an embodiment of the present invention,
Figure 2 is a view for illustrating the date position detecting system of the image storing system,
Figure 3 is a view for illustrating the difficulty in recognizing the date,
Figure 4 is a view for illustrating operation of the recognition order estimating section, and
Figure 5 is a flow chart for illustrating operation of the image storing system of this embodiment.

DESCRIPTION OF THE PREFERRED EMBODIMENT

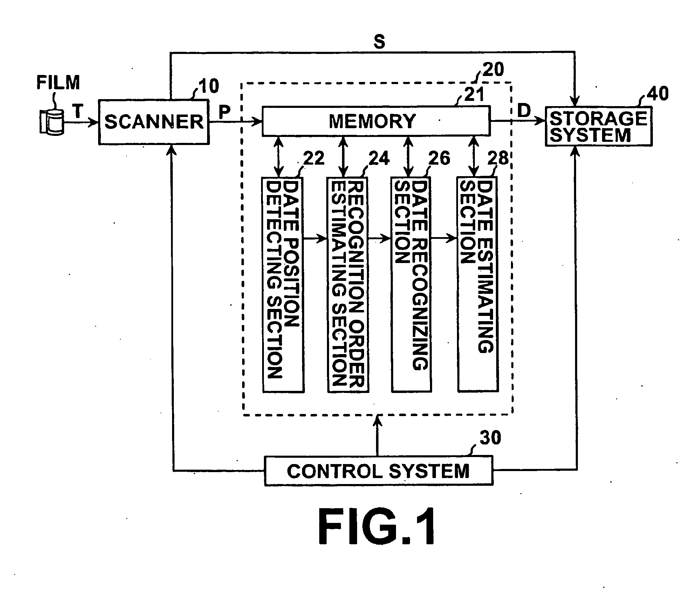

In Figure 1, an image storing system in accordance with an embodiment of the present invention comprises a film scanner 10 which pre-scans a plurality of photographs T (T1, T2, T3, ••••Tn: n stands for the number of photographs) on a roll film to convert them into a plurality of pieces of low-resolution image data P (P1, P2, P3, ••••Pn) and final-scans the same to convert the same into a plurality of pieces of storing image data S (S1, S2, S3, ••••Sn), a dating system 20 which judges the date of taking the photographs on the basis of the low-resolution image data P and dates or attaches date information D (D1, D2, D3, ••••Dn) to each of the pieces of image data, a storage system 40 which stores the pieces of image data S in correlation with the pieces of date information, and a control system 30 which controls the film scanner 10, the dating system 20, and the storage system 40. The dating system 20 comprises a date position detecting section 22 which detects the position of the date on the photographs on the basis of the low-resolution image data P, a recognition order estimating section 24 which estimates the order of recognition in which pieces of date information are extracted from the pieces of image data P, a date recognizing section 26 which extracts a plurality of pieces of date information D from the pieces of image data P of higher orders, a date estimating section 28 which estimates the date information D for the image data from which the date recognizing section 26 does not extract the date information D and a memory 21 which temporarily stores the low-resolution image data P, the date position, the recognition order, the dates recognized or estimated and the like.

Operation of the dating system 20 will be described hereinbelow.

Operation of the date position detecting section 22 will be first described.

The date position detecting section 22 detects the position of the date on the basis of the fact that the photographs photographed on one roll of photographic films are substantially the same in position, color and shape of date though various in objects. For example, the date position detecting section 22 adds up the signal values of each color (R, G and B) for the same pixels (the position of each pixel is represented by (x, y)) of the pieces of the low-resolution image data P and averages the sum of signal values of R, G, B, thereby obtaining average color data Ri' (x, y), Gi' (x, y) and Bi' (x, y) wherein i stands for 1, 2, 3 ••• m (m stands for the number of pixels in the low-resolution image data). Generally average color data for a pixel not corresponding to a date represent a color close to gray since the object differs from exposure (photograph) to exposure but average color data for a pixel corresponding to a date represents a color close to a color unique to the date (e.g., red or yellow) since the date in each exposure of one roll film does not fluctuate in color. The date position detecting section 22 of the image storing system of this embodiment detects pixels exhibiting a color close to the date color on the basis of average color data for the respective pixels and determines the position of such pixels as the position of date.

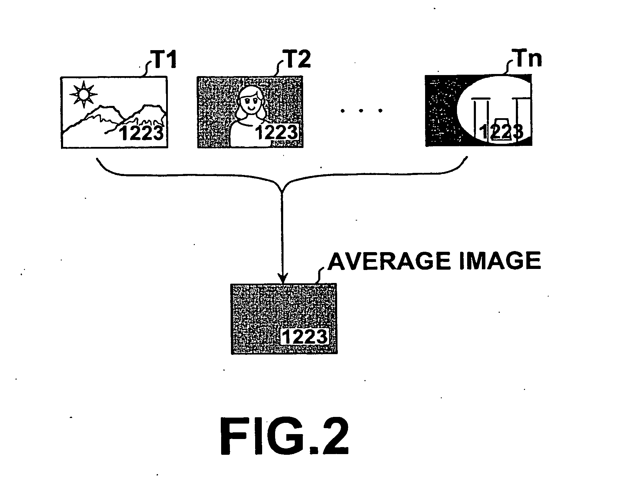

Figure 2 shows the difference between the image represented by the average color data average color data Ri' (x, y), Gi' (x, y) and Bi' (x, y) (will be referred to as "average image", hereinbelow) and the original photographs T (T1, T2, ••• Tn). Since the object of the photograph differs from exposure to exposure and various colors are superposed one on another in the average image, the part not corresponding to the date is close to gray in color in the average image, whereas since the date is in the same color in all the photographs, the part corresponding to the date is in the same color as the date in the average image.

Operation of the recognition order estimating section 24 will be described next.

The recognition order estimating section 24 estimates the order of recognition on the basis of the flatness and/or the blackness of the background of the date position detected by the date position detecting section 22.

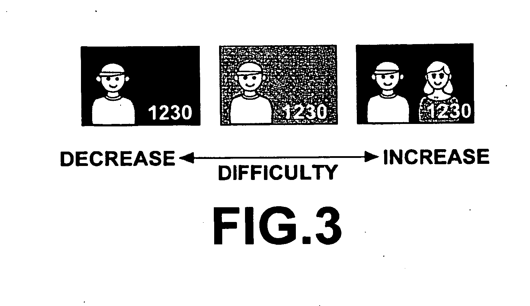

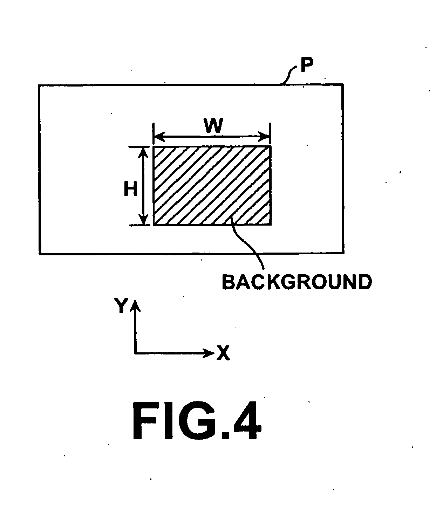

Figure 3 is a view for illustrating a relation between the difficulty in recognizing the date and the type of background. The background of the date in the photographs shown in Figure 3 is flat and black in the leftmost photograph, flat and light in the second leftmost photograph and complicated and light and as can be visually understood, the difficulty in recognizing the date increases from the left toward the right. In this particular embodiment, the recognition order estimating section 24 sets the order of recognition for the low-resolution image data P on the basis of the fact that the date is easier to recognize as the background thereof becomes flatter and blacker. Figure 4 is a view for illustrating operation of the recognition order estimating section 24 in estimating the order of recognition. The hatched portion in Figure 4 represents the background of the date (a rectangular area of W × H including the date position) . The recognition order estimating section 24 first calculates the density Q of the pixels in the background of the date position except the pixels corresponding to the date and calculates the brightness Bi (i=1, 2, 3, ••• n) of the date in each pieces of the low-resolution image data P according to the following formula (1) and at the same time, calculates the density dispersion Gi (i=1, 2, 3, ••• n) of the background of the date for each of the photographs.

$$Bi = \frac{\left(\sum_{j=1}^{a}\sum_{k=1}^{b}Qi(x_j,y_k)\right)}{(H+W)}$$

$$Gi = \frac{\left(\sum_{j=1}^{a}\sum_{k=1}^{b}Qi^2(x_j,y_k)\right)}{(H+W)} - \left(\frac{\sum_{j=1}^{a}\sum_{k=1}^{b}Qi^2(x_j,y_k)}{(H+W)}\right)^2 \quad \cdots\cdots (1)$$

wherein i stands for 1,2, ••• ,n, j stands for 1,2, ••• ,a, k stands for 1,2, ••• ,b, a represents the total number of rows of pixels in the direction of X and b represents the total number of rows of pixels in the direction of Y.

The recognition order estimating section 24 estimates the order of recognition so that the date is more preferentially recognized from the photograph as the brightness B and the density dispersion G of the background of the date in the photograph is lower. For example, photographs which are low in both the brightness B and the density dispersion G, those which are low in the brightness B though high in the density dispersion G, those which are low in the density dispersion G though high in the brightness B and those which are high in both the brightness B and the density dispersion G are given the priority of recognition in this order.

The date recognition section 26 stepwise extracts the date information from the image data representing a photograph given a higher priority of recognition and outputs the extracted date information to the date estimating section 28. The date estimating section 28 estimates the date of taking the photograph corresponding to the image data from which the date information has not been extracted on the basis of the date information.

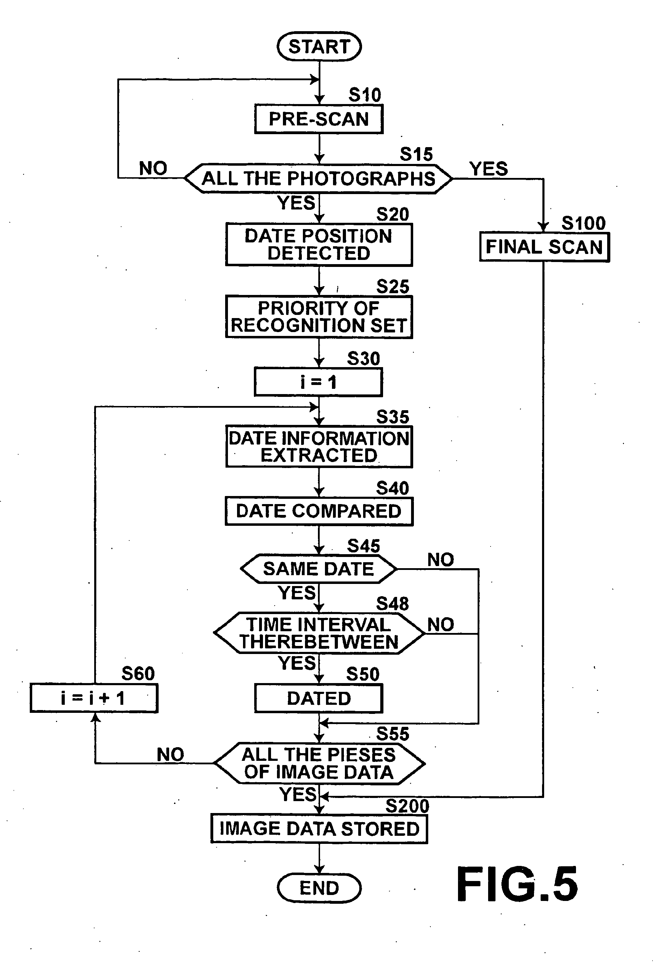

Operation of the image storing system of this embodiment will be described in accordance with the flow chart shown in Figure 5.

The control system 30 first causes the film scanner 10 to pre-scan all the photographs photographed on one film roll. (steps S10 and S15) A plurality of pieces of low-resolution image data P1, P2, ••• Pn are sent to the memory 21 of the dating system 20 and stored. The date position detecting section 22 of the dating section 20 detects positions of pixels corresponding to dates in the pieces of low-resolution image data in the aforesaid manner and sends the positions of the pixels to the recognition order estimating section 24 and the memory 21. (step S20) The recognition order estimating section 24 sets the priority of recognition for the pieces of the low-resolution image data P and sends it to the date recognizing section 26 and the memory 21. (step S25) The date recognizing section 26 first extracts date information from a piece of image data which is the highest in priority of recognition (i=1). (steps S30 and S35) The date estimating section 28 compares pieces of date information extracted by the date recognizing section 26 and checks whether there are same dates. (steps S40 and S45) When there are same dates, the photographs taken between the photographs represented by pieces of image data which are the same in date are all given the same date. (steps S45, S48 and S50) The extracted date information and the given date are stored in the memory 21 together with the image data given the same date. When extraction of date information or dating are ended, or there is no same dates (step S45), or the photographs having the same date was adjacent to each other (step S48), the control system 30 causes the date recognizing section 26 and the date estimating section 28 to repeat steps S35 to S50 for the image data which is the highest next in the priority of recognition until all the image data is extracted with the date information or dated in the manner described above. (step S60)

The pieces of date information D given to the pieces of image data T are stored in the memory in correlation with the image data T.

After pre-scan by the film scanner 10 is carried out on all the photographs T, the control system 30 causes the film scanner 10 to final-scan the photographs T and store high-resolution image data S (S1, S2, ••• Sn) obtained by final-scan in the storage system 40. (steps S100 and S200)

The storage system 40 reads out date information D given to each piece of image data T on the basis of correlation between the low-resolution image data T and the storing image data S from the memory 21 and stores therein the storing image data S together with the date information D given to each image data S in correlation with each other.

As can be understood from the description above, in the image storing system of this embodiment, the date information is preferentially extracted from a photograph given a higher priority of recognition and the photograph taken between a pair of photographs represented by a pair of pieces of image data having the same date information is provided with the same date information. Accordingly, recognition of dates for all the photographs is not necessary and processing can be executed rapidly.

Further, since a plurality of photographs taken, for instance, by a photographic camera are necessarily arranged in the order of dates of taking the photographs, a photograph taken between a pair of photographs taken under the same date is necessarily taken on the same day. Accordingly, in accordance with the image storing system of the embodiment described above, the photographs can be accurately dated.

Though a preferred embodiment of the present invention has been described above, the present invention need not be limited to the preferred embodiment but may be variously modified within the scope of the present invention.

For example, though, in the embodiment described above, pre-scan and final-scan are carried out to separately obtain low-resolution image data for dating and high-resolution image data for storing in order to shorten the time required for dating processing, only the final scan may be carried out so that the dating processing is carried out directly on the storing high-resolution image data.

Though, in the embodiment described above, image data is obtained by scanning a photographic film, image data may be obtained by scanning photographic prints. In this case, the prints are arranged in the order of photograph and the prints are scanned in this order.

Further, though being determined on the basis of both the flatness and the blackness of the background of the date in the embodiment described above, the priority of extracting the date information may be determined on the basis of either one of the flatness and the blackness of the background of the date.

Further, though an average image data is employed as the addition image data in estimating the date position in the embodiment described above, an addition image data obtained by simple addition may be employed.

## Claims

1. A dating system comprising
   a conversion means (10) which converts a plurality of photographs taken in a time series into pieces of image data,

**EP 1 351 485 B1**

an extracting means (26) which extracts date information from said pieces of image data,
a dating means (28) which provides a piece of image data, representing a photograph taken between a pair of photographs represented by a pair of pieces of image data having the same information, with the same date information,

**characterized by**
a probability judging means (22, 24) for processing said pieces of image data, which judges for each piece of image data a probability that date information can be extracted from the piece of image data,
wherein said extracting means (26) extracts the date information preferentially from the piece of image data for which said probability is higher.

2. A dating system as defined in claim 1, in which the probability judging means comprises
a date position detecting means (22) which detects the position of the date on the photograph represented by the piece of image data, and
an estimating means (24) which estimates that the probability is higher as the flatness and/or the blackness of the background of the date position is higher.

3. A dating system as defined in claim 1 or 2 in which the conversion means (10) comprises a film scanner which reads an image recorded on a photographic film and converts it into a piece of image data can be employed.

4. A computer program which is for dating a plurality of pieces of image data representing a plurality of photographs taken in a time series and for causing a computer to execute procedures comprising
probability judging processing said pieces of image data for judging a probability for each piece of image data, that date information can be extracted from the piece of image data,
extracting processing for extracting date information from said pieces of image data, preferentially from the piece of image data for which said probability is high, and
dating processing for providing a piece of image data, representing a photograph taken between a pair of photographs represented by a pair of pieces of image data having the same date information, with the same date information.

5. A computer readable medium in which the computer program for causing a computer to perform a computer program as defined in claim 4 has been recorded.

6. A photography date obtaining apparatus for obtaining dates recorded in photographs which have been photographed on one roll of photographic film, comprising the dating system of any of claims 1 to 3, wherein said extracting means (26) and said probability judging means (22, 24) are adapted to process a low resolution data sets.

7. An apparatus as defined in claim 6, wherein said conversion means is adapted for converting photographs also into high resolution data sets, the apparatus further comprising
means for obtaining addition image data by carrying out addition processing on the image data sets; and
wherein said probability judging means is adapted for judging the position of the dates on each photograph on the basis of the addition image data.

8. An apparatus as defined in claim 6 in which the conversion means comprises a film scanner which reads an image recorded on a photographic film and converts it into low resolution image data sets.

9. A computer program which is for obtaining dates recorded in photographs which have been photographed on one roll of photographic film, for causing a computer to execute procedures comprising those defined by claim 4, wherein the probability judging processing and the extracting of date information are carried out on the basis of low resolution image data sets.

10. A computer program as defined in claim 9, wherein conversion processing is carried out for converting each of the photographs into low resolution image data sets and high resolution image data sets;
operation processing is carried out for obtaining addition image data by carrying out addition processing on the low resolution image data sets; and wherein
judging processing is carried out for judging the position of the dates on each photograph on the basis of the addition image data.

11. A computer readable medium in which the computer program as defined in claim 9 or 10 has been recorded.

7

**Patentansprüche**

1.  Datierungssystem, umfassend
    eine Umwandlungseinrichtung (10), die eine Mehrzahl von in einer zeitlichen Folge aufgenommenen Photographien in Stücke von Bilddaten umwandelt,
    eine Extrahiereinrichtung (26), die Datumsinformation aus den Stücken von Bilddaten extrahiert,
    eine Datierungseinrichtung (28), die ein Stück von Bilddaten bereitstellt, welches eine Photographie repräsentiert, die zwischen einem Paar von Photographien aufgenommen wurde, die durch ein Paar von Stücken von Bilddaten der gleichen Information mit der gleichen Datumsinformation aufgenommen wurde,
    **gekennzeichnet durch**
    eine Wahrscheinlichkeits-Beurteilungseinrichtung (22, 24) zum Verarbeiten der Stücke von Bilddaten, welche für jedes Stück von Bilddaten eine Wahrscheinlichkeit dafür beurteilt, dass sich aus dem Stück von Bilddaten Datumsinformation extrahieren lässt,
    wobei die Extrahiereinrichtung (26) die Datumsinformation vorzugsweise aus demjenigen Stück von Bilddaten extrahiert, für welches die Wahrscheinlichkeit größer ist.

2.  Datierungssystem nach Anspruch 1, bei dem die Wahrscheinlichkeits-Beurteilungseinrichtung aufweist:

    eine Datumsstellen-Detektiereinrichtung (22), die die Stelle des Datums auf der durch das Stück von Bilddaten repräsentierten Photographie nachweist, und
    eine Abschätzeinrichtung (24), die die Wahrscheinlichkeit als höher einschätzt, wenn die Flachheit und/oder die Dunkelheit des Hintergrunds der Datumsstelle größer ist.

3.  Datiersystem nach Anspruch 1 oder 2, bei dem die Umwandlungseinrichtung (10) einen Filmscanner aufweist, der ein auf einem photographischen Film aufgezeichnetes Bild liest und dieses in ein zu verwendendes Stück von Bilddaten umwandelt.

4.  Computerprogramm zum Datieren einer Mehrzahl von Stücken von Bilddaten, die eine Mehrzahl von Photographien repräsentieren, die in einer zeitlichen Folge aufgenommen wurden, und zum Veranlassen eines Computers, Prozeduren auszuführen, welche umfassen:

    eine Wahrscheinlichkeits-Beurteilungsverarbeitung für die Stücke von Bilddaten, um eine Wahrscheinlichkeit für jedes Stück von Bildinformation darüber zu beurteilen, dass die Datumsinformation sich aus dem Stück von Bilddaten extrahieren lässt,
    eine Extrahierverarbeitung zum Extrahieren von Datumsinformation aus den Stücken von Bilddaten, vorzugsweise aus dem Stück von Bilddaten, für welches die Wahrscheinlichkeit groß ist, und
    eine Datierungsverarbeitung zur Bereitstellung eines Stücks von Bilddaten, das eine Photographie repräsentiert, die zwischen einem Paar von Photographien aufgenommen wurde, welches durch ein Paar von Stücken von Bilddaten gleicher Datumsinformation repräsentiert wird und gleiche Datumsinformation aufweist.

5.  Computerlesbares Medium, auf dem das Computerprogramm zum Veranlassen eines Computers, das Computerprogramm nach Anspruch 4 auszuführen, aufgezeichnet wurde.

6.  Photographierdatums-Ermittlungsvorrichtung zum Ermitteln von Daten, die auf Photographien aufgezeichnet sind, die auf einer photographischen Filmrolle photographisch aufgezeichnet wurden, umfassend das Datierungssystem nach einem der Ansprüche 1 bis 3, wobei die Extrahiereinrichtung (26) und die Wahrscheinlichkeits-Beurteilungseinrichtung (22, 24) dazu ausgebildet sind, Datensätze geringer Auflösung zu verarbeiten.

7.  Vorrichtung nach Anspruch 6, bei der die Umwandlungseinrichtung dazu ausgebildet ist, Photographien auch in Datensätze hoher Auflösung umzuwandeln, wobei die Vorrichtung außerdem aufweist:

    eine Einrichtung zum Erhalten zusätzlicher Bilddaten, in dem eine zusätzliche Verarbeitung an den Bilddatensätzen vorgenommen wird; und
    wobei die Wahrscheinlichkeits-Beurteilungseinrichtung dazu ausgebildet ist, die Stelle von Daten auf jeder Photographie auf der Grundlage der zusätzlichen Bilddaten zu beurteilen.

8.  Vorrichtung nach Anspruch 6, bei der die Umwandlungseinrichtung einen Filmscanner aufweist, der ein auf einem photographischen Film aufgezeichnetes Bild liest und dieses in Bilddatensätze geringer Auflösung umwandelt.

**9.** Computerprogramm zum Ermitteln von Daten, die auf Photographien aufgezeichnet sind, die auf einer photographischen Filmrolle photographisch aufgezeichnet wurden, um einen Computer zu veranlassen, Prozeduren auszuführen, die jene nach Anspruch 4 umfassen, wobei die Wahrscheinlichkeits-Beurteilungsverarbeitung und das Extrahieren von Datumsinformation auf der Grundlage von Bilddatensätzen geringer Auflösung vorgenommen werden.

**10.** Computerprogramm nach Anspruch 9, bei dem die Umwandlungsverarbeitung so ausgeführt wird, dass jede der Photographien in Bilddatensätze geringer Auflösung und Bilddatensätze hoher Auflösung umgewandelt wird; eine Operationsverarbeitung durchgeführt wird, um zusätzliche Bilddaten zu gewinnen, indem eine Zusatzverarbeitung bezüglich der Bilddatensätze geringer Auflösung vorgenommen wird, und wobei die Beurteilungsverarbeitung ausgeführt wird, um die Stelle von Daten auf jeder Photographie auf der Grundlage der zusätzlichen Bilddaten zu beurteilen.

**11.** Computerlesbares Medium, auf dem das Computerprogramm nach Anspruch 9 oder 10 aufgezeichnet wurde.

**Revendications**

**1.** Système de datation comprenant :

un moyen (10) de conversion qui convertit une pluralité de photographies prises dans une série temporelle en morceaux de données d'image ;
un moyen (26) d'extraction qui extrait, desdits morceaux de données d'image, de l'information de date ;
un moyen (28) de datation qui fournit, à un morceau de données d'image représentant une photographie prise entre une paire de photographies représentée par une paire de morceaux de données d'image ayant la même information, la même information de date ;
**caractérisé :**

**par** un moyen (22, 24) d'estimation de probabilité destiné à traiter lesdits morceaux de données d'image, qui estime, pour chaque morceau de données d'image, une probabilité que l'information de date puisse être extraite du morceau de données d'image ;
dans lequel ledit moyen (26) d'extraction extrait l'information de date de préférence à partir du morceau de données d'image pour lequel ladite probabilité est plus élevée.

**2.** Système de datation selon la revendication 1, dans lequel le moyen d'estimation de probabilité comprend :

un moyen (22) de détection de position de date qui détecte la position de la date sur la photographie représentée par le morceau de données d'image ; et
un moyen (24) d'estimation qui estime que la probabilité est plus élevée à mesure que l'uniformité et/ou le caractère sombre du fond de la position de date sont plus élevés.

**3.** Système de datation selon la revendication 1 ou 2, dans lequel le moyen (10) de conversion comprend un analyseur de film qui lit une image enregistrée sur un film photographique et qui la convertit en un morceau de données d'image qui peut être employé.

**4.** Programme d'ordinateur qui est destiné à dater une pluralité de morceaux de données d'image représentant une pluralité de photographies prises dans une série temporelle et à faire qu'un ordinateur exécute des procédures comprenant :

un traitement d'estimation de probabilité desdits morceaux de données d'image pour estimer, pour chaque morceau de données d'image, une probabilité qu'une information de date puisse être extraite du morceau de données d'image ;
un traitement d'extraction pour extraire, desdits morceaux de données d'image, de l'information de date, de préférence à partir du morceau de données d'image pour lequel ladite probabilité est élevée ; et
un traitement de datation pour fournir, à un morceau de données d'image représentant une photographie prise entre une paire de photographies représentée par une paire de morceaux de données d'image ayant la même information de date, la même information de date.

**5.** Support lisible en ordinateur sur lequel a été enregistré le programme d'ordinateur destiné à faire qu'un ordinateur exécute un programme d'ordinateur selon la revendication 4.

6. Dispositif d'obtention de dates de photographie destiné à obtenir des dates enregistrées dans des photographies qui ont été photographiées sur une même bobine de film photographique, comprenant le système de datation selon l'une quelconque des revendications 1 à 3, dans lequel ledit moyen (26) d'extraction et ledit moyen (22, 24) d'estimation de probabilité sont aptes à traiter des ensembles de données à basse définition.

7. Dispositif selon la revendication 6, dans lequel ledit moyen de conversion est apte à convertir des photographies aussi en ensembles de données à haute définition, le dispositif comprenant en outre :

    un moyen destiné à obtenir des données d'image d'addition en effectuant un traitement d'addition sur les ensembles de données d'image ; et
    dans lequel ledit moyen d'estimation de probabilité est apte à estimer la position des dates sur chaque photographie sur la base des données d'image d'addition.

8. Dispositif selon la revendication 6, dans laquelle le moyen de conversion comprend un analyseur de film qui lit une image enregistrée sur un film photographique et qui la convertit en ensembles de données d'image à basse définition.

9. Programme d'ordinateur qui est destiné à obtenir des dates enregistrées dans des photographies qui ont été photographiées sur une même bobine de film photographique, pour faire qu'un ordinateur exécute des procédures comprenant celles définies par la revendication 4, dans lequel le traitement d'estimation de probabilité et l'extraction d'information de date sont effectués sur la base d'ensembles de données d'image à basse définition.

10. Programme d'ordinateur selon la revendication 9, dans lequel le traitement de conversion est effectué pour convertir chacune des photographies en des ensembles de données d'image à basse définition et des ensembles de données d'image à haute définition ;
    dans lequel un traitement de calcul est effectué pour obtenir des données d'image d'addition en effectuant un traitement d'addition sur les ensembles de données d'image à basse définition ; et
    dans lequel un traitement d'estimation est effectué pour estimer la position des dates sur chaque photographie sur la base des données d'image d'addition.

11. Support lisible en ordinateur dans lequel a été enregistré le programme d'ordinateur selon la revendication 9 ou 10.

S

FILM

T → SCANNER 10 P → MEMORY 20 21 D → STORAGE SYSTEM 40

22 24 26 28

DATE POSITION DETECTING SECTION

RECOGNITION ORDER ESTIMATING SECTION

DATE RECOGNIZING SECTION

DATE ESTIMATING SECTION

CONTROL SYSTEM 30

# FIG.1

FIG.2

DECREASE ◄─────────────────► INCREASE
            DIFFICULTY

# FIG.3

EP 1 351 485 B1

FIG.4

START

S10
PRE-SCAN

NO ← S15
ALL THE PHOTOGRAPHS → YES
YES

S20
DATE POSITION
DETECTED

S100
FINAL SCAN

S25
PRIORITY OF
RECOGNITION SET

S30
i = 1

S35
DATE INFORMATION
EXTRACTED

S40
DATE COMPARED

S45
SAME DATE → NO
YES

S48
TIME INTERVAL
THEREBETWEEN → NO
YES

S60
i = i + 1

S50
DATED

S55
ALL THE PIESES
OF IMAGE DATA ← NO
YES

S200
IMAGE DATA STORED

END

FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6251083 A
- JP 11212992 A
- JP 2000184168 A
- US 2001055126 A1